# EUROPEAN PATENT APPLICATION

(11) **EP 4 641 037 A1**
(43) Date of publication of application: **29.10.2025**
(21) Application number: 23929989.4
(22) Date of filing: 24.11.2023
(51) Int. Cl.: F16C 11/04, G09F 9/30, H04M 1/02

(54) **ROTATING SHAFT APPARATUS AND FOLDABLE-SCREEN DEVICE**

(30) Priority: 24.03.2023 CN 202310305432
(71) Applicant: Honor Device Co., Ltd., Shenzhen, Guangdong 518040 (CN)
(72) Inventor: WANG, Wenhao, Shenzhen, Guangdong 518040 (CN); SONG, Bennan, Shenzhen, Guangdong 518040 (CN); HAN, Ye, Shenzhen, Guangdong 518040 (CN); ZHOU, Guotong, Shenzhen, Guangdong 518040 (CN)
(74) Representative: MERH-IP Matias Erny Reichl Hoffmann Patentanwälte PartG mbB
(86) International application number: PCT/CN2023/133975
(87) International publication number: WO 2024/198421

(57) **Abstract**

This application provides a rotating shaft apparatus and a foldable-screen device, used in the field of electronic devices. The rotating shaft apparatus includes a rotating shaft cover and a limiting structure. The rotating shaft cover and the limiting structure form a limiting cavity. One or more flexible material layers pass through the limiting cavity, and fixed positions at two ends of each flexible material layer are respectively located at two sides of the limiting cavity. The limiting cavity is configured to limit a movement direction of the one or more flexible material layers inside the limiting cavity when the fixed positions at the two ends of the flexible material layer move relative to each other. In this way, the limiting cavity limits a movement direction of a shaft-penetrating flexible material layer at a rotating shaft, so that bending forms of the flexible material layers at the rotating shaft are consistent. **In** addition, the shaft-penetrating flexible material layer is limited inside the limiting cavity, to prevent the shaft-penetrating flexible material layer from jacking up an inner screen of the foldable-screen device, generating light and shadow on the inner screen at the rotating shaft, and affecting user experience.

## Description

This application claims priority to Chinese Patent Application No. 202310305432.2, filed with the China National Intellectual Property Administration on March 24, 2023 and entitled "ROTATING SHAFT APPARATUS AND FOLDABLE-SCREEN DEVICE", which is incorporated herein by reference in its entirety.

### TECHNICAL FIELD

This application relates to the technical field of foldable-screen devices, and in particular, to a rotating shaft apparatus and a foldable-screen device.

### BACKGROUND

A foldable-screen device is a device that can be implemented in a foldable screen display form through a bendable part such as a hinge or a flexible screen. Hardware systems corresponding to different flexible screens are usually connected by using a shaft-penetrating FPC (Flexible Printed Circuit, flexible printed circuit), to implement signal transmission and power transfer. Shaft penetrating means that an FPC penetrates a rotating shaft, so that two ends of the FPC are located in middle frames corresponding to the different flexible screens. In addition, the foldable-screen device usually adds a shaft-penetrating graphene layer to enhance a thermal conduction property, so as to avoid a problem of abnormal display of a part of a foldable screen due to a large temperature difference between the different flexible screens.

In an existing solution, the shaft-penetrating FPC and the graphene layer share a position of the rotating shaft and are stacked in an overlapping manner. Because both the shaft-penetrating FPC and graphene are flexible materials, and basic mechanical properties such as hardnesses, moduli, and tension coefficients of the two flexible materials greatly differ from each other, the shaft-penetrating FPC and graphene at the rotating shaft respectively present different forms when the foldable-screen device is in an unfolded state. The inconsistency of the forms may cause the shaft-penetrating FPC and graphene to interfere with each other during bending, reducing bending lives of the shaft-penetrating FPC layer and the graphene layer. In addition, the inconsistency of the forms may further cause the shaft-penetrating FPC and graphene at the rotating shaft to jack up an inner screen of the foldable-screen device, generating light and shadow on the inner screen at the rotating shaft, and affecting user experience.

### SUMMARY

An objective of this application is to provide a rotating shaft apparatus and a foldable-screen device, to prevent flexible material layers from interfering with each other during bending. In addition, a shaft-penetrating flexible material layer is prevented from jacking up an inner screen of the foldable-screen device, generating light and shadow on the inner screen at a rotating shaft, and affecting user experience.

According to a first aspect, this application provides a rotating shaft apparatus, used in a foldable-screen device. The apparatus includes:
a rotating shaft cover and a limiting structure. The rotating shaft cover and the limiting structure form a limiting cavity. One or more flexible material layers pass through the limiting cavity, and fixed positions at two ends of each flexible material layer are respectively located at two sides of the limiting cavity. The limiting cavity is configured to limit a movement direction of the one or more flexible material layers inside the limiting cavity when the fixed positions at the two ends of the flexible material layer move relative to each other.

For example, two flexible material layers, namely, a shaft-penetrating FPC layer and a graphene layer pass through the limiting cavity. When fixed positions at two ends of the shaft-penetrating FPC layer and the graphene layer move relative to each other, for example, move far away from each other, the shaft-penetrating FPC layer and the graphene layer at the rotating shaft move inside the limiting cavity. In this way, the limiting cavity can limit a movement direction of a shaft-penetrating flexible material layer at a rotating shaft, so that bending forms of the flexible material layers at the rotating shaft are consistent. In addition, the shaft-penetrating flexible material layer is limited inside the limiting cavity, to prevent the flexible material layer from bending in a rotating shaft region and jacking up an inner screen of a foldable screen, so as to prevent light and shadow from being generated on the screen, and affecting user experience.

In a possible implementation, a side of the limiting structure far away from the limiting cavity includes a groove, for example, an n-shaped profiled structure. The groove is configured to accommodate a part of a screen of the foldable-screen device when the fixed positions at the two ends of the flexible material layer are closest to each other. In other words, when the flexible material layer is in a folded state (where flexible screens at the two ends form an angle of 0°), a water drop angle is formed by the foldable screen. The groove may accommodate the water drop angle, to facilitate thinning of the entire mobile phone and improvement of a crease of the inner screen.

In a possible implementation, when the fixed positions at the two ends of the flexible material layer are farthest away from each other (where the flexible screens at the two ends form an angle of 180°), a maximum width of the groove is greater than a maximum height of the groove. The maximum width of the groove is parallel to the foldable screen of the foldable-screen device; and the maximum height of the groove is perpendicular to the foldable screen of the foldable-screen device. In this case, an arc surface interface on which the limiting structure is in contact with the shaft-penetrating flexible material layer is a parabolic-like line whose width is greater than a height. The parabolic-like line is used to provide profiling support for the shaft-penetrating flexible material layer, so that contact between the shaft-penetrating FPC layer and an outer screen can be avoided, to prevent light and shadow from being generated due to the shaft-penetrating FPC layer and the inner screen, and affecting user experience.

In a possible implementation, a plurality of flexible material layers pass through the limiting cavity, specifically, a thermally conductive material layer and a flexible printed circuit pass through the limiting cavity. The thermally conductive material layer may be a graphene layer, configured to implement heat transfer between flexible screens at different sides. The flexible printed circuit, also referred to as a shaft-penetrating FPC layer, is configured to implement signal transmission and power transfer between different flexible screens.

In a possible implementation, the thermally conductive material layer uses a corrugated surface. Compared with another thermally conductive material layer with a flat surface, the thermally conductive material layer with the corrugated surface can improve a bending life of the thermally conductive material layer.

In a possible implementation, a material thickness of the thermally conductive material layer at a bending portion is greater than a material thickness at a non-bending portion. For example, for the graphene layer, when the thickness at the bending portion is increased, a modulus of the graphene layer may be increased. When the modulus of the graphene layer is increased to be consistent with that of the shaft-penetrating FPC layer, the shaft-penetrating FPC layer and the graphene layer have good form consistency.

In a possible implementation, the bending portion is located inside the limiting cavity. Thickening of a limited bending region ensures consistency of a form of each flexible material layer. Specifically, when consistency of forms of the shaft-penetrating FPC layer and the graphene layer at the rotating shaft is good, because redundancy of the shaft-penetrating FPC layer and the graphene layer rarely exists in another region, the consistency of the forms of the shaft-penetrating FPC layer and the graphene layer can also be ensured. Therefore, the bending portion in the limiting cavity is thickened, so that on the basis that each flexible material layer is ensured, costs for thickening may further be reduced.

In a possible implementation, the flexible printed circuit is provided with a positioning engagement groove, where the positioning engagement groove is connected to the thermally conductive material layer, and a width of the positioning engagement groove ranges from 2 mm to 3 mm. In the rotating shaft region, a shaft-penetrating FPC is connected to the thermally conductive material layer, for example, the graphene layer, through the positioning engagement groove. This can increase support strength of the shaft-penetrating FPC layer. Otherwise, because the graphene layer is directly pasted to the shaft-penetrating FPC layer, a position of copper cabling of the shaft-penetrating FPC layer deviates from a bending neutral layer, a bending life index decreases, and a requirement on a bending life cannot be met.

The positioning engagement groove may be connected to the thermally conductive material layer by using an adhesive.

In a possible implementation, two sides of the positioning engagement groove are provided with vacant slots. For example, the thermally conductive material layer and the shaft-penetrating FPC layer are connected through an air gap. In this way, it can be ensured that the copper cabling in the shaft-penetrating FPC is located at the bending neutral layer.

The rotating shaft apparatus provided in this embodiment of this application may be used in the inner screen of the foldable-screen device, or may be used in the outer screen of the foldable-screen device.

According to a second aspect, this application provides a foldable-screen device, where the device includes a main frame, an auxiliary frame, a rotating shaft door panel, and a rotating shaft apparatus.

The main frame is connected to the auxiliary frame through the rotating shaft apparatus and the rotating shaft door panel, and the rotating shaft door panel limits a relative movement direction of a foldable screen of the foldable-screen device. The rotating shaft apparatus is the rotating shaft apparatus according to any implementation of the first aspect.

It should be understood that descriptions of technical features, technical solutions, beneficial effects or similar expressions in this application do not imply that all features and advantages can be achieved in any single embodiment. On the contrary, it can be understood that descriptions of features or beneficial effects mean that specific technical features, technical solutions, or beneficial effects are included in at least one embodiment. Therefore, the descriptions of the technical features, the technical solutions, or the beneficial effects in the specification do not necessarily mean a same embodiment. Further, the technical features, technical solutions, and beneficial effects described in this embodiment may be combined in any suitable manner. A person skilled in the art understands that embodiments can be implemented without one or more particular technical features, technical solutions, or beneficial effects of a particular embodiment. In other embodiments, additional technical features and beneficial effects may further be identified in a specific embodiment that does not reflect all the embodiments.

### BRIEF DESCRIPTION OF DRAWINGS

FIG. 1 shows a foldable screen according to an embodiment of this application;
FIG. 2 is a perspective top view in which a foldable-screen device is in a fully unfolded state according to an embodiment of this application;
FIG. 3 is a schematic diagram of connection between a shaft-penetrating FPC and graphene when an entire mobile phone is in a folded state according to an existing solution;
FIG. 4 is a schematic diagram of an unfolded state of a foldable-screen device according to an embodiment of this application;
FIG. 5 is a schematic structural diagram of a rotating shaft apparatus according to an embodiment of this application;
FIG. 6 is a schematic diagram of an unfolded state of a foldable-screen device according to an embodiment of this application;
FIG. 7 is a schematic structural diagram of a foldable screen formed by a rotating shaft apparatus according to an embodiment of this application;
FIG. 8 is a schematic diagram of a fully unfolded state of a screen that uses a corrugated surface according to an embodiment of this application;
FIG. 9 is a schematic diagram of a corrugated surface according to an embodiment of this application; and
FIG. 10 is a schematic diagram of an inner screen of which a thickness at a bending portion is greater than a thickness at a non-bending portion according to an embodiment of this application.

### DESCRIPTION OF EMBODIMENTS

The following clearly and completely describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The term "and/or" used herein describes only an association relationship for describing associated objects and represents that three relationships may exist. For example, A and/or B may represent the following three cases: Only A exists, both A and B exist, and only B exists.

In the specification and claims in embodiments of this application, the terms such as "first" and "second" are intended to distinguish between different objects, but do not indicate a particular order of the objects. For example, a first target object and a second target object are intended to distinguish between different target objects, but do not indicate a particular order of the target objects.

In embodiments of this application, the term such as "exemplarily" or "for example" is used to represent giving an example, an illustration, or a description. Any embodiment or design scheme described as "exemplary" or "for example" in embodiments of this application should not be explained as being more preferable or having more advantages than other embodiments or design schemes. Exactly, the terms such as "exemplary" or "for example" are intended to present related concepts in a specific manner.

In the descriptions of embodiments of this application, unless otherwise stated, "a plurality of" means two or more. For example, a plurality of processing units means two or more processing units. "A plurality of systems" means two or more systems.

To make a person skilled in the art better understand the present invention, the following describes embodiments of this application with reference to the accompanying drawings.

In a foldable-screen device, a user may implement a foldable screen display form through a bendable part such as a hinge (also referred to as a rotating shaft apparatus) or a flexible screen, to enlarge a screen size, and maintain convenience of single-hand operation and convenience of carrying. The foldable-screen device may be a device including an entire flexible screen. The rotating shaft apparatus divides the flexible screen into two parts. When the flexible screen is folded, the two parts of the flexible screen may be folded along the rotating shaft apparatus. In addition, the foldable-screen device may alternatively be a device including two flexible screens. The two flexible screens use different display logic and are connected through the rotating shaft apparatus, to implement folding and unfolding of the foldable-screen device. In addition, the foldable-screen device may alternatively be a device including three flexible screens formed by folding through two rotating shaft apparatuses, or the like.

In these foldable-screen devices, a shaft-penetrating flexible material layer is usually arranged at a rotating shaft, and two ends of the shaft-penetrating flexible material layer are respectively arranged in middle frames of different flexible screens, so that signal transmission, power transfer, and heat transfer between the different flexible screens are implemented. The flexible material layer is made of a flexible material. The flexible material is used for indicating a material that can be squeezed to be deformed, and has a better deformation capability in comparison with a rigid material. For example, graphene is a commonly used flexible material having a thermal conduction property. In this embodiment of this application, the flexible material layer may be a shaft-penetrating FPC layer and/or graphene layer, or may be another flexible material layer that can implement signal transmission, power transfer, and heat transfer.

In the related art, the shaft-penetrating flexible material layer has two layers, namely, a shaft-penetrating FPC layer and a graphene layer, where the FPC layer and the graphene layer share a position of the rotating shaft and are stacked in an overlapping manner. Because basic mechanical properties such as hardnesses, moduli, and tension coefficients of a shaft-penetrating FPC and graphene greatly differ from each other, the shaft-penetrating FPC layer and the graphene layer at the rotating shaft may present different forms when the foldable-screen device is in an unfolded state. The inconsistency of the forms may cause the shaft-penetrating FPC layer and the graphene layer to interfere with each other during stacking, reducing bending lives of the shaft-penetrating FPC layer and the graphene layer. In addition, the inconsistency of the forms may further cause the shaft-penetrating FPC layer and the graphene layer at the rotating shaft to jack up an inner screen of the foldable-screen device, generating light and shadow on the inner screen at the rotating shaft, and affecting user experience.

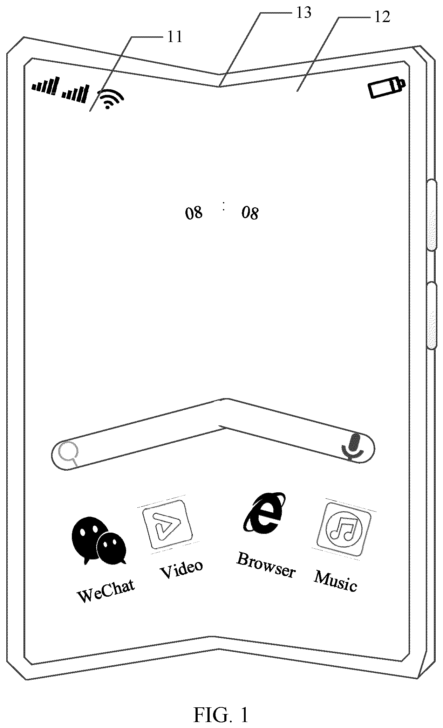

For example, FIG. 1 shows a foldable-screen mobile phone according to an embodiment of this application.

When the foldable-screen mobile phone is used, a user may fold or unfold a flexible screen 11 and a flexible screen 12 through a rotating shaft apparatus 13. The flexible screen 11 and the flexible screen 12 may be two flexible screens having different display logic, or may be two parts of an entire flexible screen. For example, when an angle between the flexible screen 11 and the flexible screen 12 is the largest, the folded-screen mobile phone is fully unfolded. When an angle between the flexible screen 11 and the flexible screen 12 is the smallest, the foldable-screen mobile phone is fully folded. In this case, the inner screen of the foldable-screen device may not be used for display and is in an off-state, and an outer screen is used for display. The outer screen may be located on the other side opposite to the flexible screen 11 or the flexible screen 12.

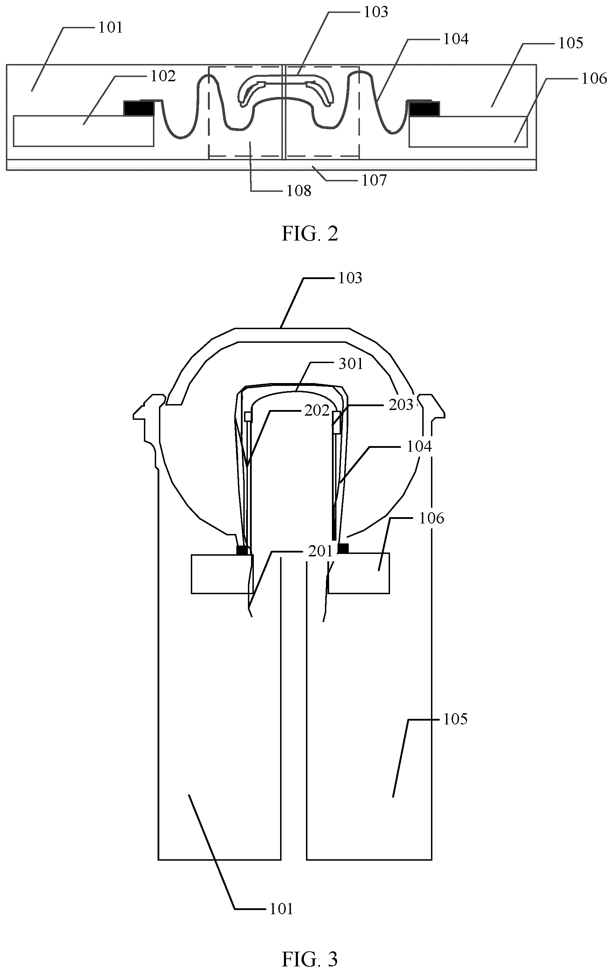

To better describe the shaft-penetrating flexible material layer arranged at the rotating shaft, detailed descriptions are provided below with reference to FIG. 2 to FIG. 4.

FIG. 2 is a perspective top view in which the foldable-screen device shown in FIG. 1 is in a fully unfolded state.

A hardware system 102 of a main frame 101 corresponding to the flexible screen 11 and a hardware system 106 of an auxiliary frame 105 corresponding to the flexible screen 12 are connected through a shaft-penetrating FPC layer 104, to implement signal transmission and power transfer. A mainboard system on chip (System on Chip, SoC) and an inner screen display driver IC (Display Driver IC, DDIC) are arranged on a side of the main frame 101.

A start point of the shaft-penetrating FPC layer 104 is at a fixed position of the main frame 101, an end point of the shaft-penetrating FPC layer 104 is at a fixed position of the auxiliary frame 105, and a middle part of the shaft-penetrating FPC layer sequentially passes through the main frame 101, a rotating shaft 108, and the auxiliary frame 105.

A rotating shaft cover 103 is further arrange on the rotating shaft 108, to prevent parts at the rotating shaft 108 from being exposed to the outside, so that the parts can be protected, and can be protected from dust and water. A screen 107 is folded and unfolded based on the main frame 101, the rotating shaft 108, and the auxiliary frame 105. The screen 107 indicates that the flexible screen 11 and the flexible screen 12 form a same screen.

The reason why shaft-penetrating graphene is added based on the shaft-penetrating FPC is that an increasingly light and thin foldable-screen mobile phone causes a poor heat-emitting capability of the entire mobile phone, and local heat generation of the main frame is concentrated, resulting in that a temperature-rise speed of the main frame is faster than that of the auxiliary frame. In addition, there are a large number of fine parts on the rotating shaft. In this case, a thermal conduction property is poor, causing a large temperature difference between the main frame and the auxiliary frame. The large temperature difference between the main frame and the auxiliary frame may cause abnormal display of a part of the screen. The addition of shaft-penetrating graphene is equivalent to addition of a thermally conductive channel between the main frame and the auxiliary frame. FIG. 3 is a schematic diagram of connection between a shaft-penetrating FPC and graphene in a fully folded state according to an existing solution. In the fully folded state, an angle between the main frame and the auxiliary frame is the smallest.

The shaft-penetrating FPC layer 104 and a shaft-penetrating graphene layer 201 share positions of the rotating shaft and through holes of the main frame and the auxiliary frame, and are stacked in an overlapping manner. The shaft-penetrating FPC layer is fixed to the main frame and the auxiliary frame through a fixing point arranged on a main board and a fixing point arranged on an auxiliary board 106. In addition, the shaft-penetrating graphene layer is fixed to a rotating shaft door panel 202 and a rotating shaft door panel 203 through a fixing point near the main board and a fixing point near the auxiliary board 106. A fixing point of the shaft-penetrating graphene layer does not coincide with a fixing point of the shaft-penetrating FPC layer. At the rotating shaft, the shaft-penetrating FPC layer and the graphene layer are not fixed.

A quantity of the rotating shaft door panels in FIG. 3 is two, and the two rotating shaft door panels are symmetrical along a vertical bisector of a line segment formed by farthest two endpoints of the rotating shaft cover 103. For the two rotating shaft door panels, when the mobile phone is fully folded, an angle between the rotating shaft door panel 202 and the rotating shaft door panel 203 is the smallest. In this case, a folded angle 301 in a shape similar to a water drop is formed on the screen. When the mobile phone is fully unfolded, the angle between the rotating shaft door panel 202 and the rotating shaft door panel 203 is the largest. The main frame 101 is connected to the auxiliary frame 105 through the rotating shaft door panels and the rotating shaft apparatus, and is configured to limit a relative movement direction of a foldable screen of the foldable-screen device. For example, the rotating shaft door panels shown in FIG. 3 limit the relative movement direction of the foldable screen of the foldable-screen device as a horizontal inward-folding direction.

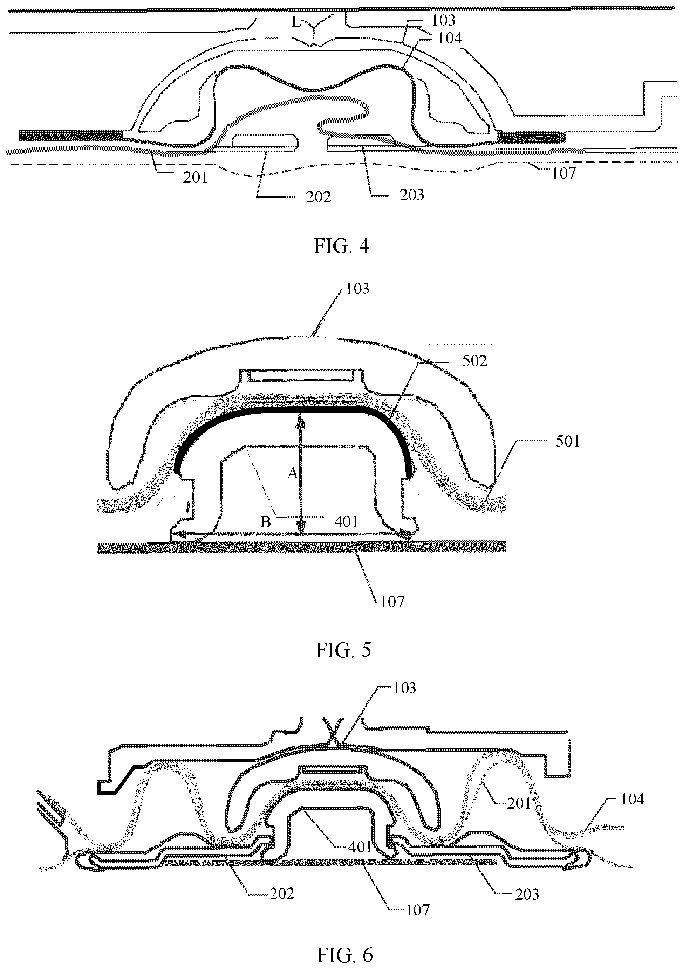

The foldable-screen device shown in FIG. 3 is fully unfolded, to obtain an expanded view shown in FIG. 4. In this case, the angle between the rotating shaft door panel 202 and the rotating shaft door panel 203 is the smallest. At the rotating shaft, the shaft-penetrating FPC layer 104 and the graphene layer 201 have a redundant length, and the shaft-penetrating FPC layer 104 and the graphene layer 201 are bent at the rotating shaft. A bending degree of the shaft-penetrating FPC layer is less than a bending degree of the graphene layer 201. On one hand, bending of the shaft-penetrating FPC layer and the graphene layer 201 is likely to jack up the screen 107, causing light and shadow on the screen. On the other hand, bending forms of the shaft-penetrating FPC layer 104 and the graphene layer 201 are inconsistent. Consequently, the shaft-penetrating FPC layer and the graphene layer interfere with each other during bending, reducing bending lives of the shaft-penetrating FPC layer and the graphene layer. It is found through analysis that because basic mechanical parameters such as hardnesses, moduli, and tension coefficients of a shaft-penetrating FPC and graphene greatly differ from each other, in an unfolded state of the entire mobile phone, bending of the flexible material is presented in different forms.

Based on this, an embodiment of this application provides a rotating shaft apparatus. A limiting structure is added to the existing rotating shaft apparatus. A shaft-penetrating flexible material layer forms a limiting cavity through the limiting structure and a rotating shaft cover, to limit a bending form of the shaft-penetrating flexible material layer, so that bending forms of the flexible material layer at a rotating shaft are consistent. In addition, the shaft-penetrating flexible material layer is limited inside the limiting cavity, to prevent the flexible material layer from bending in a rotating shaft region and jacking up a screen of a foldable-screen device, so as to prevent light and shadow from being generated on the screen at the rotating shaft, and affecting user experience.

A foldable-screen device whose type is the foldable-screen device shown in FIG. 3 and FIG. 4 is used as an example to describe the rotating shaft apparatus provided in this application in detail with reference to the accompanying drawings. It should be noted that the foregoing foldable screen is an inner screen.

### Embodiment 1

FIG. 5 is a schematic structural diagram of a rotating shaft apparatus according to an embodiment of this application. The apparatus includes a limiting structure 401 and a rotating shaft cover 103. The limiting structure 401 is configured to limit a form of a shaft-penetrating flexible material layer 501 at a rotating shaft. Specifically, the limiting structure 401 and the rotating shaft cover form a limiting cavity. The shaft-penetrating flexible material layer 501 passes through the limiting cavity, and fixed positions at two ends of the shaft-penetrating flexible material layer are located on two sides of the limiting cavity.

When the fixed positions at the two ends of the flexible material layer move relative to each other, a movement direction of each shaft-penetrating flexible material layer 501 inside the limiting cavity is the same or basically the same, to ensure that forms of different flexible material layers at the rotating shaft are the same.

For example, assuming that the fixed positions at the two ends approach each other, it indicates that an inner screen is gradually folded. When the fixed positions at the two ends are closest to each other, it indicates that the inner screen is in a fully folded state. In this case, there is no redundancy at each shaft-penetrating flexible material layer 501 at the rotating shaft, and a movement direction of each shaft-penetrating flexible material layer 501 is the same or basically the same.

Assuming that the fixed positions at the two ends are far away from each other, it indicates that the inner screen is gradually unfolded. When the fixed positions at the two ends are the farthest away from each other, it indicates that the inner screen is in an unfolded state. In this case, at the rotating shaft, the limiting cavity limits a movement direction of each flexible material layer 501, so that a movement manner of each flexible material layer 501 at the rotating shaft is the same or basically the same.

A cavity form and a cavity size of the limiting cavity in this embodiment of this application are not limited in embodiments of this application. The cavity form may be a cavity form having a protrusion shown in FIG. 5, or may be another cavity form such as a concave cavity form.

For example, the limiting structure 401 is added to the foldable-screen device shown in FIG. 4 at the rotating shaft, to form a schematic diagram of an unfolded state of the foldable-screen device, as shown in FIG. 6. The flexible material layers 501 are the shaft-penetrating FPC layer 104 and a thermally conductive material layer (for example, the graphene layer 201 shown in the figure). The shaft-penetrating FPC layer 104 and the graphene layer 201 form the limiting cavity through the limiting structure and the rotating shaft cover. When fixed positions (where the shaft-penetrating FPC layer 104 and the graphene layer 201 are respectively fixed) at two ends of the shaft-penetrating FPC layer 104 and the graphene layer 201 move relative to each other, compared with FIG. 4, forms of the shaft-penetrating FPC layer 104 and the graphene layer 201 at the rotating shaft are highly consistent.

At positions other than the rotating shaft, for example, a position of a main frame and a position of an auxiliary frame, a probability of bending of the shaft-penetrating FPC layer 104 and the graphene layer 201 is low. Therefore, form consistency processing may not be performed on the shaft-penetrating FPC layer and the graphene layer at the positions other than the rotating shaft.

In addition, for a shape of the limiting structure, a side of the limiting structure far away from the limiting cavity includes a groove, that is, a side close to a foldable screen is provided with the groove. The groove is configured to accommodate a part of the inner screen of the foldable-screen device in a folded state. Still refer to FIG. 3. When the screen is folded, a folded angle 301 in a shape similar to a water drop is formed. The groove may partially accommodate the water-drop-shaped folded angle 301, that is, provide space for the water-drop-shaped folded angle 301, to prevent the water-drop-shaped folded angle 301 from directly coming into contact with a solid plane.

The rotating shaft apparatus shown in FIG. 5 is used as an example. The limiting structure of the rotating shaft apparatus may be of an n-shaped profiled structure (a structure shown in FIG. 5). The rotating shaft cover 103 and a "line segment" on an upper side of the limiting structure form the limiting cavity, and the other side is close to the inner screen. Compared with a structure with a dot on an upper side, for example, a triangular structure (where fixed points and the rotating shaft cover 103 form the limiting cavity), a cross-sectional area of a support part of the n-shaped profiled structure is larger. In this way, a larger part of the shaft-penetrating FPC layer and a larger part of the graphene layer cover a holder, so that consistency of the forms of the shaft-penetrating FPC layer and the graphene layer at the rotating shaft is improved.

In addition, the groove on a lower side of the n-shaped profiled structure may increase the space for accommodating the water-drop-shaped folded angle 301 when the foldable-screen mobile phone is fully folded.

Moreover, the limiting structure may alternatively be considered as a U-shaped profiled structure, a horseshoe-shaped profiled structure, or the like. A specific structural form of the limiting structure may be adjusted by a person skilled in the art based on a requirement.

Considering that a relationship between a height of the groove and a width of the groove affects a situation in which the shaft-penetrating flexible material layer 501 is in contact with an inner screen 107, specifically, a situation in which the shaft-penetrating FPC layer is in contact with the inner screen 107, when the shaft-penetrating FPC layer is in contact with the inner screen 107, light and shadow are generated on the inner screen, affecting user experience. A maximum width and a maximum height of the groove are limited in this application. The maximum width of the groove is greater than the maximum height of the groove. A width direction of the groove is a direction parallel to the inner screen of the foldable-screen mobile phone, and a height direction is a direction perpendicular to the inner screen of the foldable-screen mobile phone.

When the maximum width of the groove is greater than the maximum height of the groove, an arc surface interface on which the limiting structure is in contact with the shaft-penetrating flexible material layer is a parabolic-like line whose width is greater than a height. Refer to a parabolic-like line 502 shown in FIG. 5. In this case, an axis of symmetry of the parabolic-like line is an axis of symmetry of the n-shaped profiled structure. The parabolic-like line is used to provide profiling support for the shaft-penetrating flexible material layer, so that contact between the shaft-penetrating FPC layer and an outer screen can be avoided.

For example, as shown in FIG. 5, a reference plane is the inner screen 107, a size of an n-shaped profiled structure parallel to a direction of the inner screen 107 is a width value, and a size of an n-shaped profiled structure perpendicular to the inner screen 107 is a height value. To avoid generation of light and shadow on the inner screen due to contact between the shaft-penetrating FPC layer and the inner screen 107, a maximum width value A is greater than a maximum height value B.

Specifically, a value of Ais related to a thickness of the entire mobile phone. For example, the thickness of the entire mobile phone is 14.3 mm, and A ranges from 2.0 mm to 4.0 mm. For example, A is selected to be 3 mm. B>A. Considering requirements such as assembly, in an existing solution, B is usually selected to be 1.5A. In other words, when A is 3 mm, B is 4.5 mm.

It should be noted that, for the limiting cavity from the rotating shaft cover to the limiting structure, an existing perforation assembly solution cannot be used. In a process of assembling the rotating shaft, the shaft-penetrating FPC layer and the graphene layer need to be separately assembled to a rotating shaft region, and then assembly of the rotating shaft is completed. An existing perforation assembly solution is as follows: After assembly of the rotating shaft is completed, at a section of the entire mobile phone, the shaft-penetrating FPC and graphene separately pass through an empty cavity in a shaft region for assembly.

A material of the limiting structure includes, but is not limited to, steel or a titanium alloy, and a composite material including fiber materials such as a glass fiber, a carbon fiber, and an aramid fiber. For example, the n-shaped profiled holder is a metal piece, and steel is an iron-carbon alloy with a carbon content mass percentage ranging from 0.02% to 2.11%. Structural strength of these materials is good. This ensures support strength of the profiled holder, helps reduce a thickness of the profiled holder, and helps thinning of the foldable screen.

The rotating shaft apparatus provided in this embodiment of this application is used in a foldable-screen device, and limits a movement direction of a shaft-penetrating flexible material layer at a rotating shaft, so that bending forms of flexible material layers at the rotating shaft are consistent. In addition, the shaft-penetrating flexible material layer is limited inside a limiting cavity, to prevent the shaft-penetrating flexible material layer from jacking up an inner screen of the foldable-screen device, generating light and shadow on the inner screen at the rotating shaft, and affecting user experience.

### Embodiment 2

An embodiment of this application further provides another rotating shaft apparatus. On the basis of Embodiment 1, flexible material layers are connected through vacant slots. In this way, a transition layer between the shaft-penetrating FPC layer and an adjacent flexible material layer is added, to prevent copper cabling of the shaft-penetrating FPC layer from deviating to another flexible material layer. For example, the graphene layer and the shaft-penetrating FPC layer are connected through a vacant slot. The vacant slot may be an air gap (air gap).

In addition, when the shaft-penetrating FPC layer is in direct contact with the another flexible material layer such as the graphene layer, the copper cabling in the shaft-penetrating FPC layer may deviate to the graphene layer, causing a risk of fatigue disconnection at the shaft-penetrating FPC layer. The shaft-penetrating FPC layer in the rotating shaft region is provided with a positioning engagement groove, and an adjacent flexible material layer is connected to the shaft-penetrating FPC layer through a positioning engagement groove. Two sides of the positioning engagement groove are provided with vacant slots. In other words, in a non-rotating shaft region, the shaft-penetrating FPC layer is connected to an adjacent flexible material layer through a vacant slot. The positioning engagement groove limits a position of another adjacent flexible material layer in the rotating shaft region, to prevent the another adjacent flexible material layer from being directly connected to the shaft-penetrating FPC layer. In this way, the copper cabling of the shaft-penetrating FPC layer is prevented from deviating to an adjacent flexible material layer, to reduce the risk of fatigue disconnection at the shaft-penetrating FPC layer.

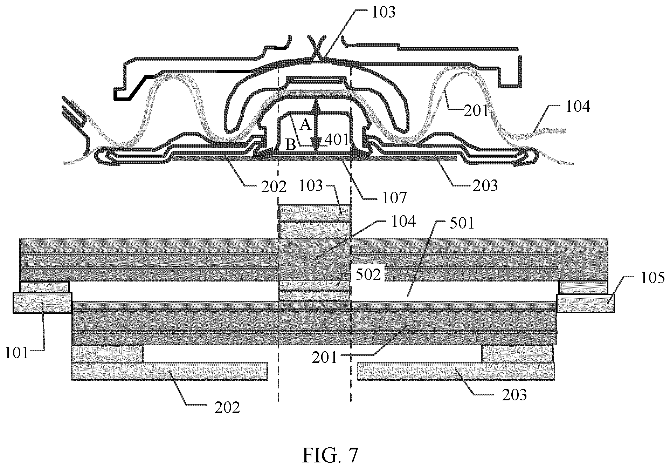

To better describe the rotating shaft apparatus provided in embodiments of this application, detailed descriptions are provided below with reference to FIG. 7.

FIG. 7 is a schematic structural diagram of a foldable screen formed by a rotating shaft apparatus according to an embodiment of this application. A limiting structure selected by the rotating shaft apparatus is of an n-shaped profiled structure 401. A maximum width value B of the n-shaped profiled structure is 1.5 times a maximum height value A (where definitions of a width direction and a height direction are in Embodiment 1, and are not described herein again).

In the structure shown in FIG. 7, in the non-rotating shaft region, the shaft-penetrating FPC layer 104 and the graphene layer 201 are connected by using an air gap 701. A thickness of an air gap 701 layer cannot be excessively small. Otherwise, an objective of avoiding deviation of the copper cabling of the shaft-penetrating FPC layer to another flexible material layer cannot be achieved. The thickness of the air gap 701 layer cannot be excessively large. Otherwise, it is not beneficial to thinning of the foldable-screen mobile phone. In this embodiment of this application, the thickness of the air gap 701 layer is selected to be 46 µm.

It should be noted that during actual use, the graphene layer needs to be as thin as possible when meeting a requirement on a thermal conduction property. In this embodiment of this application, the thickness of the graphene layer is selected to be 40 µm. In addition, thermal insulation protection needs to be provided for the graphene layer, to prevent the graphene layer from causing impact on a temperature of another device during heat transfer and affecting a life of the another device. A surface of the graphene layer 201 is covered by a PET (Polyethylene terephthalate, polyethylene terephthalate) layer with a thickness of 10 µm and a PTFE (Poly tetra fluoroethylene, poly tetra fluoroethylene) layer with a thickness of 16 µm. The graphene layer and the PTFE layer are connected by using a meshed double-sided adhesive layer with a thickness of 5 µm.

In a rotating shaft region, the shaft-penetrating FPC layer 104 is connected to the graphene layer 201 through a positioning engagement groove 502. Because the graphene layer is directly pasted to the shaft-penetrating FPC layer, a position of the copper cabling of the shaft-penetrating FPC layer deviates from a bending neutral layer, a bending life index decreases, and a requirement on a bending life cannot be met. In a possible implementation, the positioning engagement groove may be a strengthening board made of materials such as PI (polyimide), a PET (high temperature polyester film), and FR4. Main components of the strengthening board made of the material of FR4 are glass fiber cloth and an epoxy resin adhesive. The shaft-penetrating FPC layer 104 and the graphene layer 201 are connected through the strengthening board, to prevent the shaft-penetrating FPC layer from being in contact with the graphene layer, so as to improve the bending life of the shaft-penetrating FPC layer.

In the rotating shaft region, a thickness of a positioning engagement groove layer is set to be in a range of 2 mm to 3 mm, to prevent the shaft-penetrating FPC layer from being in contact with the graphene layer. To avoid external leakage of a back adhesive, it is required that a width of a back adhesive layer is less than a width of the positioning engagement groove layer (where a definition of a width direction is the same as the definition of the width direction in Embodiment 1, and details are not described herein again).

In addition, the graphene layer 201 may further be connected to the positioning engagement groove by using an adhesive (also referred to as a back adhesive), and then be connected to the shaft-penetrating FPC layer 104 through the positioning engagement groove. A material of the back adhesive may be a hot melt adhesive, a thermally conductive silicon adhesive, a silicone adhesive, or the like. The material of the adhesive is not limited in this application.

In this embodiment of this application, a thickness of the back adhesive needs to meet the following condition: A width of the back adhesive between graphene and the positioning engagement groove is less than a width of the positioning engagement groove by 0.2 mm to 0.5 mm. In this way, the shaft-penetrating FPC layer 104 can be prevented from being in direct contact with the graphene layer 201, to improve the bending life of the shaft-penetrating FPC layer.

In addition, the rotating shaft cover 103 of the foldable-screen device is pasted to the shaft-penetrating FPC layer by using a back adhesive, and the shaft-penetrating FPC layer is respectively pasted to a main board on a main frame 101 and an auxiliary board on an auxiliary frame 105 by using back adhesives at different positions. The graphene layer 201 is pasted on the rotating shaft door panel 202 and the rotating shaft door panel 203 by using adhesives at different positions.

For the solution in FIG. 7, a result is verified through CT analysis, and a verification result shows that movement forms of the shaft-penetrating graphene layer and the shaft-penetrating FPC layer are well consistent. In addition, in dynamic bending tests for the entire mobile phone for a plurality of times (200000 or more), the graphene layer and the shaft-penetrating FPC layer are not bent.

According to the rotating shaft apparatus provided in this embodiment of this application, on the basis of ensuring that forms of different flexible material layers in the rotating shaft region are consistent, it can further be ensured that copper cabling in a shaft-penetrating FPC does not deviate to an adjacent flexible material layer, and the risk of fatigue disconnection at the shaft-penetrating FPC layer can be avoided.

### Embodiment 3

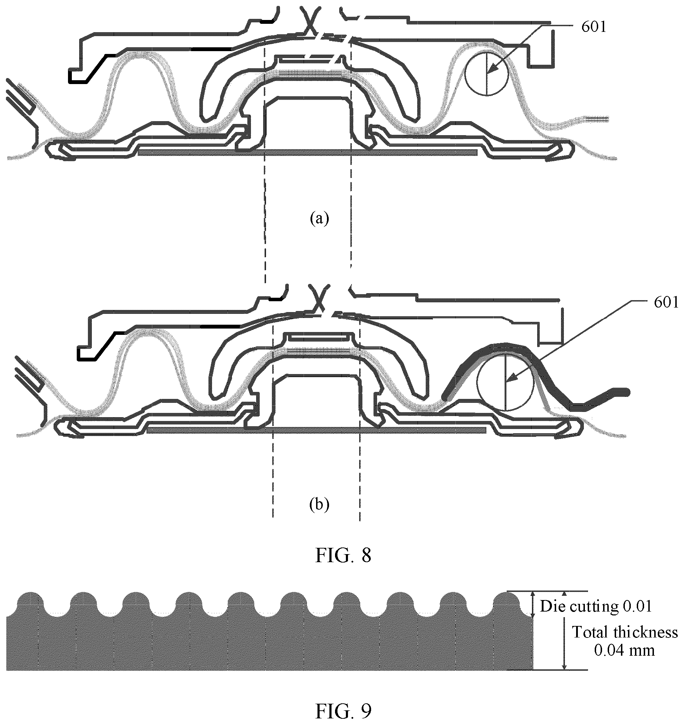

In a possible implementation, to further improve the bending life of the thermally conductive material layer, for example, the graphene layer, a corrugated surface is used on the thermally conductive material layer. To better describe this embodiment of this application, detailed descriptions are provided below with reference to FIG. 8.

FIG. 8 is a schematic diagram of a fully unfolded state of a screen that uses a corrugated surface according to an embodiment of this application. (a) shows the rotating shaft apparatus shown in FIG. 7. For a specific introduction, refer to Embodiment 2, and details are not described herein again. For a bending region 601, a bending radius of the graphene layer 201 is 0.543 mm, and a strain value for bending is 4.35%. However, a strain threshold for fracture of the graphene layer is 2.25%, and the strain value for bending in the bending region is greater than the strain threshold for fracture of graphene. In this case, there is a risk of fracture. The bending radius is a radius of an inscribed circle inscribed to the bending region.

Compared with a non-corrugated surface in (a), the corrugated surface can change a modulus of the graphene layer, and increase the strain threshold of graphene. Therefore, processing may be performed on the bending region 601 to generate a corrugated surface. (b) is a result diagram in which the screen is fully unfolded after the corrugated surface is generated by processing the bending region 601. A bending radius of the bending region 601 is 0.584, and the strain value for bending is 5.07%. In this case, the strain threshold for fracture of the graphene layer exceeds 10%. Because the strain value for bending is less than the strain threshold for fracture of graphene, the risk of fracture of the graphene layer can be reduced in comparison with (a).

For example, as shown in FIG. 9, for the graphene layer with a total thickness of 0.04 mm, a thickness of the corrugated surface is 0.01 mm. To obtain the foregoing corrugated surface structure, in a possible implementation, a partial die cutting manner may be used to obtain the corrugated surface structure with the thickness of 0.01 mm. Partial die cutting means cutting a die only in a specified region.

During actual application, not all positions need to use a corrugated surface. Considering costs for die cutting, a radius threshold of the bending radius may be set. When the bending radius is greater than the radius threshold, partial die cutting is performed on the bending region to obtain the graphene layer having the corrugated surface.

The partial die cutting manner is not limited in this embodiment of this application. Die cutting may be performed on the graphene layer through a die cutting prototype, or partial die cutting may be performed in a manner such as laser die cutting.

For example, a bending radius of each part of the graphene layer is analyzed by using simulation software, and when the bending radius is greater than the radius threshold, die cutting is performed on the graphene layer to form a corrugated surface.

The radius threshold should be set based on a bending radius corresponding to a fracture threshold. Assuming that the bending radius corresponding to the fracture threshold is 0.5, the radius threshold may be set to 0.5.

It should be noted that FIG. 8 is merely an example for description, and parameter values in FIG. 8 are merely set for ease of description that the use of the corrugated surface on the thermally conductive material layer helps reduce the risk of fracture. During actual use, a person skilled in the art may adjust the parameter values involved above.

### Embodiment 4

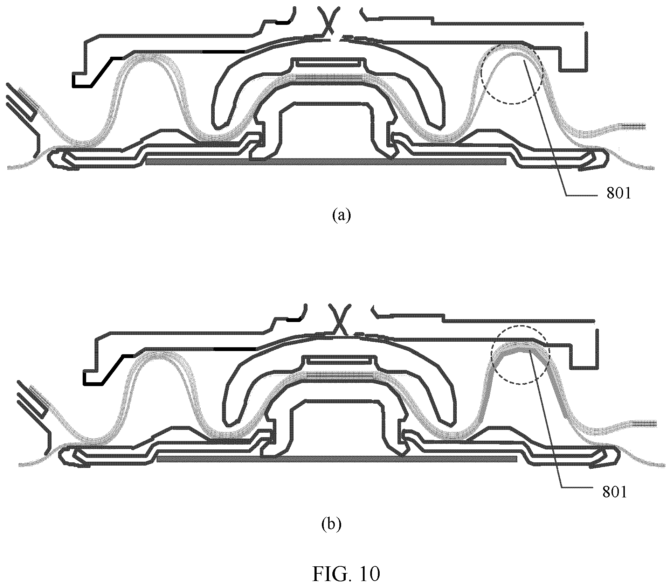

In this embodiment of this application, a bending portion is also partially thickened, so that a thickness at the bending portion may also be greater than a thickness at a non-bending portion, to improve consistency of a form of each flexible material layer. To better describe this application, descriptions are provided below with reference to FIG. 10.

FIG. 10 is a schematic diagram of a fully unfolded state of a screen of which a thickness at a bending portion is greater than a thickness at a non-bending portion according to an embodiment of this application. (a) shows the rotating shaft apparatus shown in FIG. 7. For a specific introduction, refer to Embodiment 2, and details are not described herein again. For a bending region 801, a bending radius thereof is 0.543. For a specific definition of the bending radius, refer to Embodiment 3. This is not described herein again.

Because moduli of the graphene layer and the shaft-penetrating FPC layer are inconsistent, and the modulus of the graphene layer is less than the modulus of the shaft-penetrating FPC layer, the bending radius of the graphene layer in (a) is less than a bending radius of the shaft-penetrating FPC layer, and the graphene layer and the shaft-penetrating FPC layer are inconsistent in forms. As described above, the forms of the shaft-penetrating FPC layer and the graphene layer are inconsistent, and the shaft-penetrating FPC layer and the graphene layer interfere with each other during bending, reducing the bending lives of the shaft-penetrating FPC layer and the graphene layer. Therefore, partially thickening is performed on the bending region 801, so that a thickness in the bending region 801 exceeds that in another region. For the graphene layer, when the thickness at the bending portion is increased, the modulus of the graphene layer is accordingly increased. When the modulus of the graphene layer is increased to be consistent with that of the shaft-penetrating FPC layer, the shaft-penetrating FPC layer and the graphene layer may have good form consistency. This is specifically embodied in a thickening portion, an absolute value of a difference between the bending radius of the graphene layer and the bending radius of the shaft-penetrating FPC layer is within a preset difference range, or bending radiuses of the graphene layer and the shaft-penetrating FPC layer are the same.

(b) shows bending forms of the graphene layer and the shaft-penetrating FPC layer in the bending region 801 that are obtained through thickening. By comparing the bending forms in (a) and (b), it may be found that the forms of the graphene layer and the shaft-penetrating FPC layer in (b) are well consistent in the bending region.

In a possible implementation, at least one graphene layer may be added at a position at which thickening needs to be performed, to partially thickening the graphene layer. In this embodiment of this application, thickening may be implemented in another manner. This is not limited herein.

For a manner of thickening the graphene layer, all bending portions may be thickened, and non-bending portions are not thickened, so that the shaft-penetrating FPC layer and the graphene layer at the bending portions have good form consistency. However, during actual use, considering costs for thickening, a thickening radius threshold range is generally set, and thickening processing is performed on a bending region in which the bending radius of the graphene layer is within the thickening radius threshold range. This is because a region with a larger bending radius needs a larger amount of graphene materials, and costs are excessively high.

For example, it is assumed that the thickening radius threshold range is greater than or equal to 0.1 and less than or equal to 0.3. When the bending radius of the graphene layer obtained by using simulation software is 0.2, the bending radius of graphene is within the thickening radius threshold range, and in this case, the graphene layer in this region is thickened.

A specific thickening radius threshold range may be adjusted by a person skilled in the art based on a requirement. The thickening radius threshold range is not specifically limited in this application.

In addition, in this embodiment of this application, a thickening region at the bending portion may be limited in a limiting cavity. In this way, a limiting effect of the limiting cavity is used, and the graphene layer at a bending portion of the limiting cavity is thickened, so that the consistency of the forms of the shaft-penetrating FPC layer and the graphene layer is improved.

In addition, a bending region that is in the limiting cavity and that meets a bending radius within the thickening radius threshold range is thickened, so that costs for thickening can be further reduced, and the consistency of the forms of the shaft-penetrating FPC layer and the graphene layer can be ensured.

In conclusion, during specific use of a flexible material layer, a bending portion is partially thickened, so that a thickness at the bending portion may also be greater than a thickness at a non-bending portion, to improve consistency of a form of each flexible material layer.

The rotating shaft apparatus provided in this embodiment of this application may be used in the inner screen of the foldable-screen device, or may be used in the outer screen of the foldable-screen device. A specific implementation of the rotating shaft apparatus on the outer screen is the same as that of the inner screen. This is not described herein again.

The rotating shaft apparatus provided in this embodiment of this application may be used in a foldable-screen mobile phone, or may be used in another personal computer (personal computer, PC) product with a foldable screen, or another device with a foldable screen. For example, the rotating shaft apparatus is used in a tablet computer with a foldable screen. The following specifically describes a hardware structure of the device.

An embodiment of this application provides a hardware structure of a foldable-screen device. The device specifically includes a foldable screen, and the like.

It may be understood that the structure shown in embodiments of the present invention does not constitute a specific limitation on the device. In some other embodiments of this application, the device may include more or fewer assemblies than those shown in the figures, combine some assemblies, split some assemblies, or differently arrange assemblies. The components in the portrait may be implemented by hardware, software, or a combination of software and hardware.

The foldable screen is configured to display images, videos, and the like. The foldable screen includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, a device 100 may include one or N displays 194, where N is a positive integer greater than 1.

The foldable screen of the foldable-screen device uses a main frame, an auxiliary frame, a rotating shaft door panel, and the foregoing apparatus. The main frame is connected to the auxiliary frame through the rotating shaft apparatus and the rotating shaft door panel. The rotating shaft door panel limits a relative movement direction of the foldable screen. The rotating shaft apparatus includes a rotating shaft cover and a limiting structure. The rotating shaft cover and the limiting structure form a limiting cavity. One or more flexible material layers pass through the limiting cavity, and fixed positions at two ends of each flexible material layer are respectively located at two sides of the limiting cavity. The limiting cavity is further configured to limit a movement direction of the one or more flexible material layers inside the limiting cavity when the fixed positions at the two ends of the flexible material layer move relative to each other.

It should be noted that the foregoing device is merely exemplary descriptions, and embodiments of this application may also be applied to another device having a foldable screen. This is not described herein again.

The descriptions of the processes or structures corresponding to each of the above figures have their own emphasis. For parts that are not detailed in a certain process or structure, please refer to the relevant descriptions of other processes or structures.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A rotating shaft apparatus, used in a foldable-screen device, wherein the apparatus comprises a rotating shaft cover and a limiting structure;
the rotating shaft cover and the limiting structure form a limiting cavity;
one or more flexible material layers pass through the limiting cavity, and fixed positions at two ends of each flexible material layer are respectively located at two sides of the limiting cavity; and
the limiting cavity is configured to limit a movement direction of the one or more flexible material layers inside the limiting cavity when the fixed positions at the two ends of the flexible material layer move relative to each other.

2. The apparatus according to claim 1, wherein a side of the limiting structure away from the limiting cavity comprises a groove; and the groove is configured to accommodate a part of a screen of the foldable-screen device when the fixed positions at the two ends of the flexible material layer are closest to each other.

3. The apparatus according to claim 2, wherein when the fixed positions at the two ends of the flexible material layer are farthest away from each other, a maximum width of the groove is greater than a maximum height of the groove; the maximum width of the groove is parallel to the screen of the foldable-screen device; and the maximum height of the groove is perpendicular to the screen of the foldable-screen device.

4. The apparatus according to claim 1, wherein a plurality of flexible material layers pass through the limiting cavity, and the plurality of material layers comprise a thermally conductive material layer and a flexible printed circuit.

5. The apparatus according to claim 4, wherein the thermally conductive material layer uses a corrugated surface.

6. The apparatus according to claim 4, wherein a material thickness of the thermally conductive material layer at a bending portion is greater than a material thickness at a non-bending portion.

7. The apparatus according to claim 6, wherein the bending portion is located inside the limiting cavity.

8. The apparatus according to claim 4, wherein the flexible printed circuit is provided with a positioning engagement groove, and the positioning engagement groove is connected to the thermally conductive material layer; and a width of the positioning engagement groove ranges from 2 mm to 3 mm.

9. The apparatus according to claim 8, wherein the positioning engagement groove is connected to the thermally conductive material layer by using an adhesive.

10. The apparatus according to claim 8, wherein two sides of the positioning engagement groove are provided with vacant slots.

11. The apparatus according to claim 1, wherein the apparatus is used in an inner screen of the foldable-screen device.

12. The apparatus according to claim 1, wherein the apparatus is used in an outer screen of the foldable-screen device.

13. A foldable-screen device, wherein the device comprises a main frame, an auxiliary frame, a rotating shaft door panel, and a rotating shaft apparatus; and
the main frame is connected to the auxiliary frame through the rotating shaft apparatus and the rotating shaft door panel, and the rotating shaft door panel limits a relative movement direction of a foldable screen of the foldable-screen device; and the rotating shaft apparatus is the apparatus according to claims 1 to 12.
